# EUROPEAN PATENT APPLICATION

(11) **EP 1 460 484 A2**
(43) Date of publication of application: **22.09.2004**
(21) Application number: 04005023.9
(22) Date of filing: 03.03.2004
(51) Int. Cl.: G03G 15/01

(54) **Image forming apparatus, image processing apparatus, and control methods thereof**

(30) Priority: 04.03.2003 JP 2003057137
(71) Applicant: CANON KABUSHIKI KAISHA, Tokyo (JP)
(72) Inventor: Itagaki, Tomohisa, Tokyo (JP)
(74) Representative: Vollnhals, Aurel

(57) **Abstract**

An image forming apparatus that can change to desired conditions of a color stabilization control performed through a stabilization control means, so as to provide color stabilization suited to a wide range of users, to thereby accommodate the needs of a variety of users. Color information is read from a predetermined color material by a density sensor. Color stabilization control is carried out based on the color information read from toner patch images made during image formation (S15,S16). A mode in which the color stabilization control is carried out is designated according to externally input information (S12). The color stabilization control is carried out in the designated mode (S13).

## Description

### BACKGROUND OF THE INVENTION

### Field of the Invention

The present invention relates to an image forming apparatus, such as a copier or printer, and an image processing apparatus, a control methods therefor.

### Description of the Related Art

Recent copiers are often connected to a network together with printers and used as MFPs (Multi-Function Printers). In such an environment, color matching of images printed by such apparatuses connected to the network, or matching the color of printed images with the color of images displayed on a display device such as a CRT, is often carried out. Moreover, a variety of color management methods are commonly known.

For example, color management that uses the ICC (International Color Consortium) profile involves performing color calibration (that is, color matching, characterization) by creating an ICC profile unique to an image forming apparatus such as a printer, copier or some other device, using that unique ICC profile to perform color conversion on, for example, a personal computer (PC) to create print data, and outputting that print data to the image forming apparatus corresponding to that profile, so as to match the color of the printed image to the color of the image displayed on the display device.

For ordinary users as well, with the availability on the market of software for creating profiles and of color measuring tools, the environment for matching the color output by an image forming apparatus to a desired color. In addition, another type of calibration involves changing the contents of a gamma LUT (Look Up Table) related to tonality so as to obtain a desired tonality characteristic, without using color conversion based on an ICC profile multi-dimensional LUT.

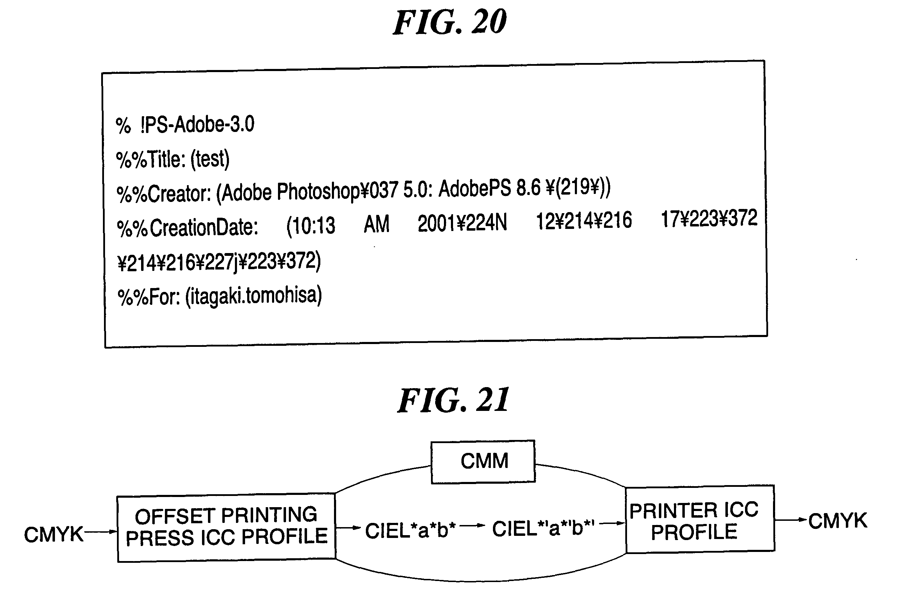

The color management methods described above are effective methods in terms of being able to restrain differences in output color between a plurality of image forming apparatuses of the same type or of different types, and the range of application of such methods is not limited to the calibrations described above but extends, for example, to include color calibration of printer printing by matching the colors of images printed by printers to the colors of images printed by offset printing presses. By using an ICC profile for an offset printing press and an ICC profile for a printer, color management like that shown in FIG. 21 can be achieved on a PC application.

FIG. 21 is a diagram showing a flow of a color management executed by a conventional image forming apparatus.

As shown in FIG. 21, the contents of an offset printing press ICC profile and a printer ICC profile are corrected in correlation with a color space that is not dependent on either of the printing press and the printer, such as a CIEL*a*b* color space, based on patch colorimetry using a color measuring tool, whereby the colors of images printed out by the offset printing press and the colors of images printed out by the printer can be matched. Print data can then be created by using a color management module (CMM) to perform color conversion using the ICC profiles.

A color management environment that includes color measuring tools, applications and profile creating software is thus provided, and therefore electrophotographic image forming apparatuses have come to be used, particularly in the design business world, for color calibration of offset printing presses as described above.

To use an image forming apparatus for such color calibration, it is essential that a printout finish as expected can be obtained, and therefore there are strict requirements for high color reproducibility. To this end, it is very important to adjust the color reproducibility of the copier engine, and for this reason a process has been performed, which involves outputting a monochrome tonality patch and calculating density at a reader so as to achieve a desired target (e.g., density linear, brightness linear, etc.), as taught, for example, by Japanese Laid-Open Patent Publication (Kokai) No. 11-75067.

Further, a process is known, which involves forming a patch image on a transfer member, calculating an amount of toner to be deposited (that is, density), using a direct reflection sensor, and feeding back the calculated value to a LUT or to a toner supply-related item (Automatic Toner Replenisher, hereinafter "ATR"), to thereby maintain color stability without undue burden being imposed on the user, as disclosed, for example, by Japanese Laid-Open Patent Publication (Kokai) Nos. 2002-72577 and 2002-72574.

However, a variety of users can connect to an image forming apparatus via a network. On the network, there are users who do not attach much importance to the color reproducibility described above as well as users who are dissatisfied with the color reproduction stabilization control disclosed in the above publication.

More specifically, the above-described method in which a patch image is formed and its density is fed back to an LUT or a toner supply-related item, if the control is performed too frequently, results in increased toner consumption and hence higher costs, which is undesirable.

Further, there are users who require high-fidelity color reproduction and are dissatisfied with ordinary color reproduction stabilization control methods, and therefore even better print picture quality stabilization is desired.

### SUMMARY OF THE INVENTION

It is an object of the present invention to provide an image forming apparatus, an image processing apparatus, and control methods therefor that can make it possible to change as desired the conditions for color stabilization control performed through a stabilization control means, so as to provide color stabilization suited to a wide range of users, to thereby accommodate the needs of a variety of users.

To attain the object, in a first aspect of the present invention, there is provided an image forming apparatus comprising an image forming device that carries out image formation, a reading device that reads color information from a predetermined color material, a stabilization control device that carries out color stabilization control based on the read color information during image formation by the image forming device, and a setting device that changes conditions in which the color stabilization control is carried out by the stabilization control device.

According to the first aspect of the present invention, it is possible to secure color stabilization suited to a wide range of users and accommodate the needs of a variety of users.

Preferably, the image forming apparatus comprises an image carrier that has formed thereon an image corresponding to an optical image, the image carrier having a normal image area and a normal non-image area, and the color material is formed on the normal image area or the normal non-image area of the image carrier.

Preferably, the color stabilization control device controls at least one of a tonality correction table for correcting tonality of the color material and a correction amount of the color material.

Preferably, the conditions in which the color stabilization control is carried out include frequency at which the color stabilization control is carried out.

More preferably, when the color material is formed on the normal image area of the image carrier, a plurality of color materials are formed on the normal image area.

More preferably, when timing in which a supply amount of the color material is controlled and timing in which the tonality correction table coincide, priority is given to the control of the supply amount of the color material.

To attain the object, in a second aspect of the present invention, there is provided an image processing apparatus comprising an image forming device that carries out image formation, a reading device that reads color information from a predetermined color material, a stabilization control device that carries out color stabilization control based on the read color information during image formation by the image forming device, and a stabilization control designation device that designates a mode in which the color stabilization control is carried out, according to externally input information, wherein the stabilization control device carries out the color stabilization control in the mode designated by the stabilization control designation device.

According to the second aspect of the present invention, it is possible to secure color stabilization suited to a wide range of users and accommodate the needs of a variety of users by designating the mode of execution of the color stabilization control according to externally input information.

Preferably, the image processing apparatus further comprises a storage device that stores the externally input information.

To attain the object, in a third aspect of the present invention, there is provided an image processing apparatus comprising an image forming device that carries out image formation, a reading device that reads color information from a predetermined color material, a stabilization control device that carries out color stabilization control based on the read color information during image formation by the image forming device, a stabilization control designation device that designates a mode in which the color stabilization control is carried out, and an analyzer device that analyzes externally input information, wherein the stabilization control designation device determines the mode in which the color stabilization control is carried out, based on results of analysis by the analyzer device and designates the determined mode for the stabilization control device.

Preferably, the image processing apparatus further comprises a storage device that stores user information and color stabilization control mode information corresponding to the user information, and the stabilization control designation device determines the color stabilization control mode to be designated for the stabilization control device by checking contents of the storage device based on the user information included in the analysis results from the analyzer device.

Preferably, in the second and third aspects of the present invention, the externally input information comprises one selected from the group consisting of a file name, a user name, an application name, a file format, a data attribute, and a descriptive code.

To attain the object, in a fourth aspect of the present invention, there is provided a control method for an image forming apparatus, comprising an image forming step of carrying out image formation, a reading step of reading color information from a predetermined color material, a stabilization control step of carrying out color stabilization control based on the read color information during image formation in the image forming step, and a setting step of changing conditions in which the color stabilization control is carried out in the stabilization control step.

Preferably, the color material is formed on a normal image area or a normal non-image area of an image carrier on which is formed an image corresponding to an optical image.

Preferably, the color stabilization control step comprising controlling at least one of a tonality correction table for correcting tonality of the color material and a correction amount of the color material.

Preferably, the color stabilization control is carried out include frequency at which the color stabilization control is carried out.

More preferably, when the color material is formed on the normal image area of the image carrier, a plurality of color materials are formed on the normal image area.

More preferably, when timing in which a supply amount of the color material is controlled and timing in which the tonality correction table coincide, priority is given to the control of the supply amount of the color material.

To attain the object, in a fifth aspect of the present invention, there is provided a control method for an image processing apparatus comprising an image forming step of carrying out image formation, a reading step of reading color information from a predetermined color material, a stabilization control step of carrying out color stabilization control based on the read color information during image formation in the image forming step, and a stabilization control designation step of designating a mode in which the color stabilization control is carried out, according to externally input information, the stabilization control step comprises carrying out the color stabilization control in the mode designated in the stabilization control designation step.

Preferably, the control method for an image processing apparatus further comprises a storage step of storing the externally input information in storage means.

To attain the object, in a sixth aspect of the present invention, there is provided a control method for an image processing apparatus comprising an image forming step of carrying out image formation, a reading step of reading color information from a predetermined color material, a stabilization control step of carrying out color stabilization control based on the read color information during image formation in the image forming step, a stabilization control designation step of designating a mode in which the color stabilization control is carried out, and an analysis step of analyzing externally input information, wherein the stabilization control designation comprises determining the mode in which the color stabilization control is carried out, based on results of analysis in the analysis step and designating the determined mode for the stabilization control step.

Preferably, the image processing apparatus control method further comprises a storage step of storing user information and color stabilization control mode information corresponding to the user information in storage means, and the stabilization control designation step comprises determining the color stabilization control mode to be designated for the stabilization control step by checking contents of the storage means based on the user information included in the analysis results obtained in the analysis step.

Preferably, in the fifth and sixth aspects of the present invention, the externally input information comprises one selected from the group consisting of a file name, a user name, an application name, a file format, a data attribute, and a descriptive code.

The above and other objects, features and advantages of the invention will become more apparent from the following detailed description taken in conjunction with the accompanying drawings.

### BRIEF DESCRIPTION OF THE DRAWINGS

FIG. 1 is a diagram schematically showing a cross-section view of the construction of an image forming apparatus according to a first embodiment of the present invention;
FIG. 2 is a diagram schematically showing the structure of a density sensor used in the image forming apparatus shown in FIG. 1; FIG. 3 is a graph showing a real time tonality correction table;
FIG. 4 is a block diagram schematically showing the configuration of an image processor and its related elements of the image forming apparatus shown in Fig. 1;
FIG. 5 is a diagram showing a stability setting screen displayed by a printer driver during printout; FIG. 6 is a diagram showing an example of user settings;
FIG. 7 is a schematic diagram showing a sequence executed during a stable mode by the image forming apparatus according to the first embodiment;
FIG. 8 is a schematic diagram showing a sequence executed during an highly stable mode by the image forming apparatus according to the first embodiment;
FIG. 9 is a flow chart showing a control process executed by the image forming apparatus according to the first embodiment;
FIG. 10 is a flow chart showing a continued part of the flow chart of FIG. 9;
FIG. 11 is a diagram showing a list of controls executed by an image forming apparatus according to a second embodiment of the present invention;
FIG. 12 is a flow chart showing a control process executed by the image forming apparatus according to the second embodiment;
FIG. 13 is a flow chart showing a continued part of the flow chart of FIG. 12;
FIG. 14 is a diagram showing a stabilization control parameter list used in a control process executed by an image forming apparatus according to a third embodiment of the present invention;
FIG. 15 is a diagram showing a stabilization control setting screen displayed during execution of the control process by the image forming apparatus according to the third embodiment;
FIG. 16 is a diagram showing the contents of a postscript file;
FIGS. 17A and 17B are diagrams showing examples of a file format that can be registered by user definition;
FIGS. 18A and 18B are diagrams showing an example of bitmap image described in PDL (page description language);
FIG. 19 is a diagram illustrating the structure of the bitmap image in FIGS. 18A and 18B;
FIG. 20 is a diagram showing an example of a PS code; and
FIG. 21 is a diagram showing a flow of a color management executed by a conventional image forming apparatus.

### DETAILED DESCRIPTION OF THE PREFERRED EMBODIMENTS

The present invention will now be described in detail below with reference to the drawings showing preferred embodiments thereof. In the drawings, elements and parts that are identical throughout the views are designated by identical reference numerals, and duplicate description thereof is omitted.

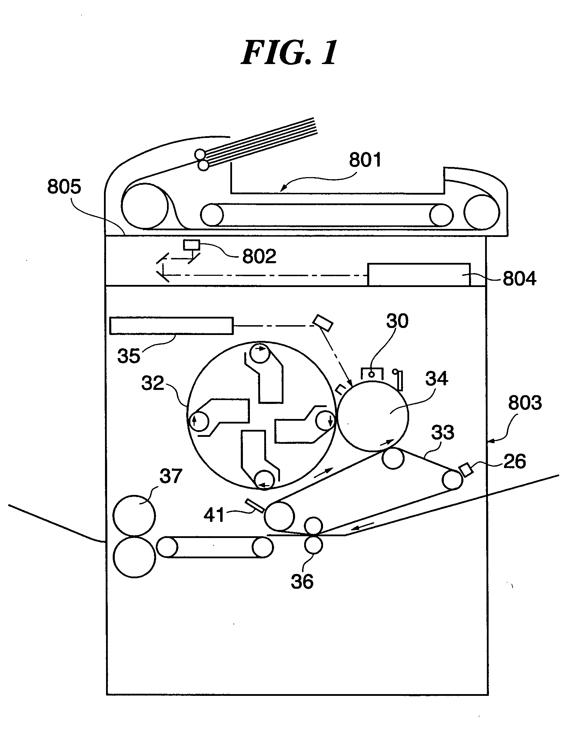

FIG. 1 is a diagram schematically showing a cross-section view of the construction of an image forming apparatus according to a first embodiment of the present invention.

In FIG. 1, the image forming apparatus according to the first embodiment is comprised of an original feeder 801 for conveying an original to a position at which an original image is optically scanned, an optical reader 802 that scans the original image and an original platen glass 805 on which the original is placed. The original feeder 801, the optical reader 802, and the original platen glass 805 constitute a reader section. The original feeder 801 is driven in synchronism with the optical reader 802. When an original is transported to the original platen glass by the original feeder 801, the optical reader 802 scans the original image while moving in leftward and rightward directions as viewed in FIG. 1 and sends reflected light (which has been optically processed as appropriate) to a photoelectric converter 804.

In FIG. 1, reference numeral 803 denotes a printer unit that performs image formation. The printer unit 803 is comprised of a photosensitive drum 34, as a first image carrier is rotatably supported, and an image forming means provided along an outer periphery of the photosensitive drum 34, for forming an image according to an image forming process. The image forming means may be of any type, but in the image forming apparatus according to the present embodiment, the image forming means is comprised of a primary charger 301 for charging the surface of the photosensitive drum 34, an exposure means 35 such as a laser beam exposure device that irradiates onto the photosensitive drum 34 an optical image obtained by color separation of a color image or an equivalent optical image to form a latent image on the photosensitive drum 34, and a rotary developing device 32 that develops the latent image on the photosensitive drum 34 to visualize the latent image as toner images. The rotary developing device 32 is comprised of cyan (C), magenta (M), yellow (Y) and black (BK) developers.

The toner images formed on the photosensitive drum 34 in the manner described above are sequentially transferred onto an intermediate transfer member 33 as a second image carrier, so that four color images are superimposed on the intermediate transfer member 33 (in four color mode). The four color toner images thus formed on the intermediate transfer member 33 are then together transferred by a secondary transfer device 36 as a transfer means, onto a transfer material P that is held by the secondary transfer device 36. The four color toner images transferred to the transfer material P are fixed onto the transfer material P by a pair of heat fixing rollers 37, and the transfer material P is then discharged from the image forming apparatus. The intermediate transfer member 33 is in the form of a belt, for example, and a cleaning blade 41 is opposed to one of four rollers that support the belt 33, to carry out cleaning of the belt 33.

It should be noted that the diameter of the photosensitive drum 34 is 84 mm, the diameter of the intermediate transfer member 33 is 168 mm, (that is, exactly twice that of the photosensitive drum 34), and accordingly the intermediate transfer member 33 has a circumference of approximately 527.52 mm. That is, in the case of a smaller size transfer material such as A4, LTR or B5 size (that is, having a sub-scanning width of 215.9 mm or less), images for two sheets are transferred onto the intermediate transfer member 33 at a time, and in the case of a larger size transfer material such as B4, LGL or A3 size, whose sub-scanning widths exceed that described above, an image for one sheet is transferred onto the intermediate transfer member 33 at a time. In addition, a density sensor 26 is provided at a position opposite the belts that support the belt 33 after the primary transfer.

Next, a description will be given of a stabilization control means.

### I. Density sensor

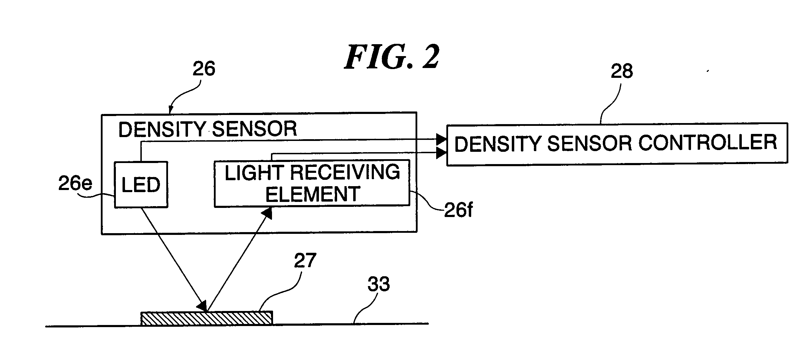

FIG. 2 is a diagram schematically showing the structure of the density sensor 26 of the image forming apparatus shown in FIG. 1.

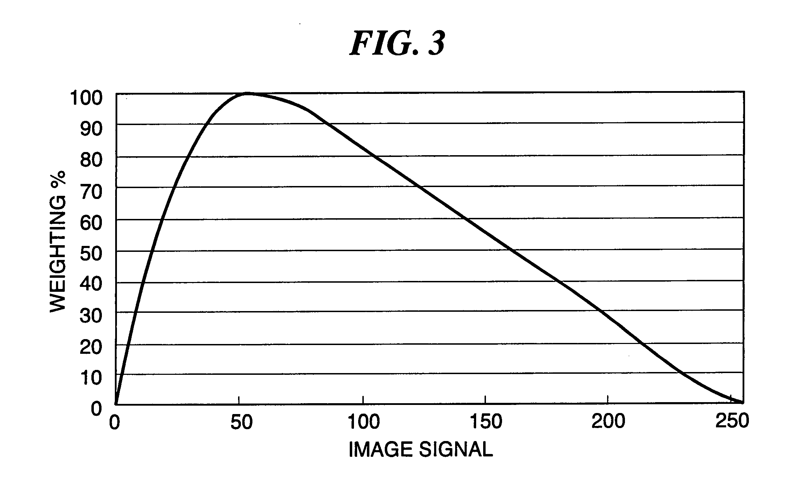

The density sensor 26, as shown in Fig. 2, is comprised of a pair of photo-sensors, specifically, a light-emitting diode (LED) 26e and a light receiving element 26f. Light emitted from the LED 26e is reflected off the surface of a patch image 27 formed on the intermediate transfer member 33 and received by the light receiving element 26f. An optical signal from the light receiving element 26f is then input to a density sensor controller 28 and density is calculated based on optical signal density correlation data in the form of a table. Using the density information thus calculated, an LUT is created by an LUT generator 121 (see FIG. 3), described later.

### II. Reader tonality correction

There are a variety of stabilization control techniques. Here, a description will be given of an automatic tonality correction technique in which a patch image is output onto paper (that is, the transfer material P) and is detected by the reader section. Automatic tonality correction is a calibration performed by the user prior to important output, and in which a tonality patch is output onto paper without using an LUT, the tonality patch on the paper placed by hand on the reader is scanned, and converted to density. An input signal is compared with the converted density with an input signal, and the tonality is corrected so as to obtain a predetermined target value (that is, the LUT is rewritten).

### III. Engine tonality correction

Next, a description will be given of control to improve usability by automatically performing the above-described stabilization control on the paper inside the image forming apparatus main body. It is impractical for the user to carry out the stabilization control on paper every day and therefore there is a need to fully automate tonality correction on paper, and such control is implemented by many actual image forming apparatuses. Specifically, a tonality patch is formed on the photosensitive drum 34 in certain timing without using a LUT or tonality correction table, which is then sensed by the density sensor 26, converted to density, and the LUT is rewritten so as to obtain a predetermined target value. The above-mentioned timing may, for example, be after the power is turned on, after a front door is opened or closed, after a predetermined number of pages are outputted, or after a change occurs in environment.

### IV. Real time tonality correction

Although the two stabilization control methods described above are excellent in stabilizing color for each job, they cannot maintain color stability when a plurality of jobs are consecutively executed. During consecutive execution of jobs, it is difficult to maintain color stability due to changes in the tonality characteristics inside the developers.

In such cases, a toner patch is formed between jobs of the consecutively executed jobs, that is, between sheets of paper, and the LUT is corrected so as to maintain color stability.

FIG. 3 is a graph showing a real time tonality correction table.

More specifically, a half tonality patch is formed on the photosensitive drum 34 using a LUT and transferred onto the intermediate transfer member 33, after which it is determined whether or not a predetermined density has been reached. If the predetermined density has not been reached, then, depending on a change in the density, a graph showing a real time tonality correction table like that in FIG. 3 is registered with the image forming apparatus before LUT correction. That is, image data having a density at a point 30H (48 in the decimal system) out of 0-FFH (255 in the decimal system) is formed on the photosensitive drum 34, and the predetermined density of that 30H portion is set to be 0.3. If the actual measured density of the formed image data at the point 30H is 0.2, which is 0.1 less than the predetermined density, a density corresponding to 0.1 is added to the density at the 30H point, while the density at the other points is decreased or increased based on the amount by which the density at the 30H point has been changed.

As to the density at the other points, based on the graph in FIG. 3, tonality correction is performed by changing the amount of correction for each signal level such that a correction amount of 100 percent is applied for the 30H point, a correction amount of 84 percent for the 20H point, and so forth. In terms of visual sensibility, a change from a highlight portion in an image to an intermediate portion is more conspicuous than a change in a shadow portion, and accordingly higher stability is required for the former change. Therefore, in the present embodiment, patch formation and control are carried with a change from a highlight portion in an image to an intermediate portion being made much of.

As to the order of processing an image signal, after processing based on the real time tonality correction table described above is completed, the conventional LUT processing must be carried out. However, the real time tonality correction table and the LUT may be combined into a single LUT. By such control, in consecutive execution of a plurality of jobs the LUT can be corrected according to a single patch and real time tonality correction can be carried out in time for the printing of the next page.

Next, a description will be given of the configuration of an image processor 209 provided in the image forming apparatus in FIG. 1.

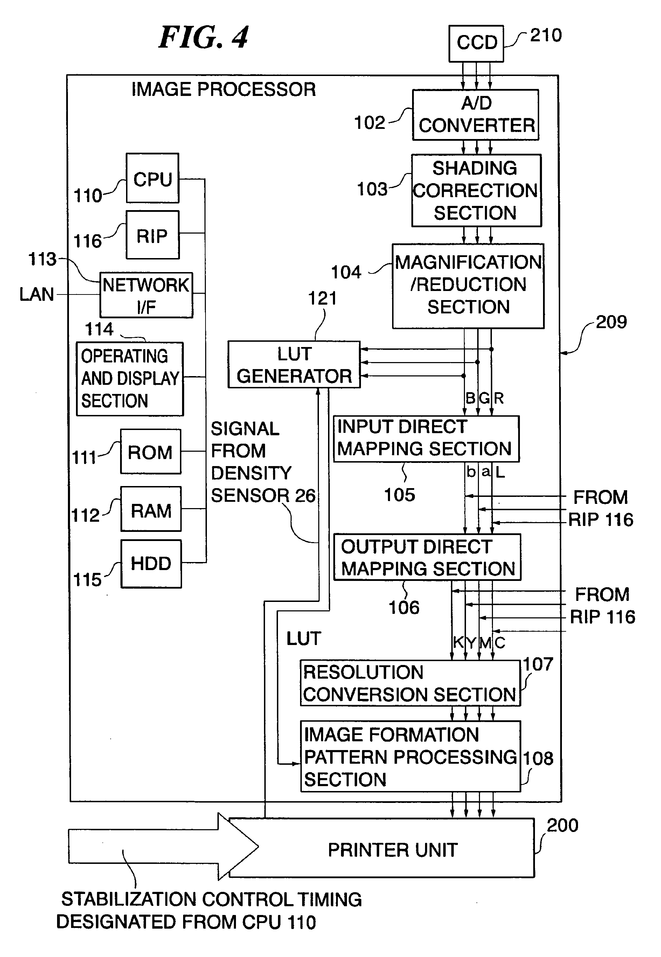

FIG. 4 is a block diagram schematically showing the configuration of an image processor 209 and its related elements of the image forming apparatus shown in Fig. 1.

In FIG. 4, a CCD 210 scans an original image at 600 dpi and inputs the scanned image as RGB signals to the image processor 209. The RGB signals input to the image processor 209 are then converted to digital RGB signals by an A/D converter 102. Connected in series to the output side of the A/D converter 102 are a shading correction section 103, a magnification/reduction section 104, an input direct mapping section 105, an output direct mapping section 106, a resolution conversion section 107 and an image formation pattern processing section 108.

The shading correction section 103 compensates for unevenness in the amount of illuminating light and a light amount generated by a lens optical system as well as unevenness in the sensitivity of the pixels of the CCD 210. The magnification/reduction section 104 enlarges or reduces the scanned image. The input direct mapping section 105 has a multi-dimensional LUT close to the ICC profile and converts the RGB signals into L*a*b* signals that are a color space not dependent on the device. The output direct mapping section 106 converts the L*a*b* signals into prescribed CMYK signals. The resolution conversion section 107 converts the 600 dpi reader information into 1200 dpi as required. In the case of a print out signal, the resolution conversion section 107 converts the resolution based on information set by the user.

The image formation pattern processing section 108 has a multivaluing function based on a line growth dither method and a bit concentration dither method for each of the respective resolutions, 600 dpi and 1200 dpi, and selects an image formation pattern through control by a CPU 110. The CMYK signals output from the image formation pattern processing section 108 are then sent to a printer section (engine) 200. It should be noted that gamma correction processing using an LUT for correcting the gamma characteristics of the printer section 200 is carried out by the image formation pattern processing section 108. The LUT is provided for each resolution as well as for each image formation pattern. Basically, the LUT processing is usually carried out before pattern processing such as matrix calculation. Moreover, the LUT provided in the image formation pattern processing section 108 is rewritable in response to an instruction from the CPU 110. The LUT is generated during reader tonality correction, engine tonality correction and continuous output real time tonality correction, by an LUT generator 121, described later. The generated LUT is then sent to the image formation pattern processing section 108 to rewrite the LUT provided in the image formation pattern processing section 108.

The RGB signals from the reader and the signal from the density sensor 26 inside the image forming apparatus are sent to the LUT generator 121. The LUT generator 121 then converts the input RGB information and the information from the density sensor 26 into respective density signals and creates an LUT for use in correcting the tonality so as to obtain a target value which is desired in terms of the relationship between the output patch signal information and the density-converted density information. The LUT thus generated can then be uploaded to the image formation pattern processing section 108.

The CPU 110 operates on a control program stored in a ROM 111, the CPU 110 to centrally control various sections or elements of the image processor 209, using a RAM 112 as a work memory, and for example, also control setting of parameters for the resolution conversion section 107 and the image formation pattern processing section 108. The CPU 110 controls an operating and display section 114 and a network interface (I/F) 113 to communicate with external devices, and input and output image information and device information. Thus, the CPU 110 controls the entire system.

A hard disk drive (HDD) 115 stores system software, ordinary image data and outputted image data and is settable by a user. Moreover, the HDD 115 also transmits information input by the user through the operating and display section 114 to the CPU 110. A raster image processor (RIP) 116 expands PDL code into a bitmap image, and sends L*a*b* signals or CMYK signals to the output direct mapping section 106 or the resolution conversion section 107.

Next, a description will be given of a method of setting stability items by a user and the contents thereof.

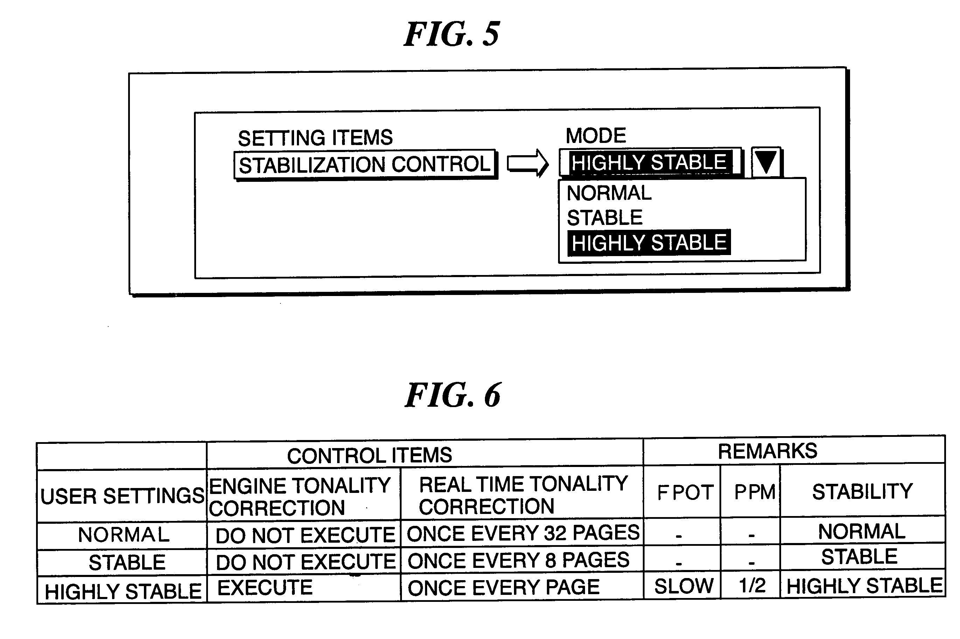

FIG. 5 is a diagram showing a stability setting screen displayed by a printer driver during printout. FIG. 6 is a diagram showing an example of user settings. "SETTING ITEM" and "MODE" (stabilization control mode) in FIG. 5 correspond to the "CONTROL ITEMS" and "USER SETTINGS" in FIG. 6.

The engine tonality correction in FIG. 6 is, as described above, a tonality correction method executed within the engine, i.e. executed prior to output. The method improves stability, but delays FPOT (First Print Out Time).

The frequency with which real time tonality correction is executed varies according to the contents of the user settings. In other words, when a stabilization control mode is set to a normal mode (NORMAL), real time tonality correction is executed once every 32 pages. That is, when the transfer material P is a small size (e.g., A4, letter size), although an intermediate tonality patch is formed between the side A image and the side B image held on the intermediate transfer member 33, the frequency is set such that real time tonality correction is executed once every 32 pages for each color.

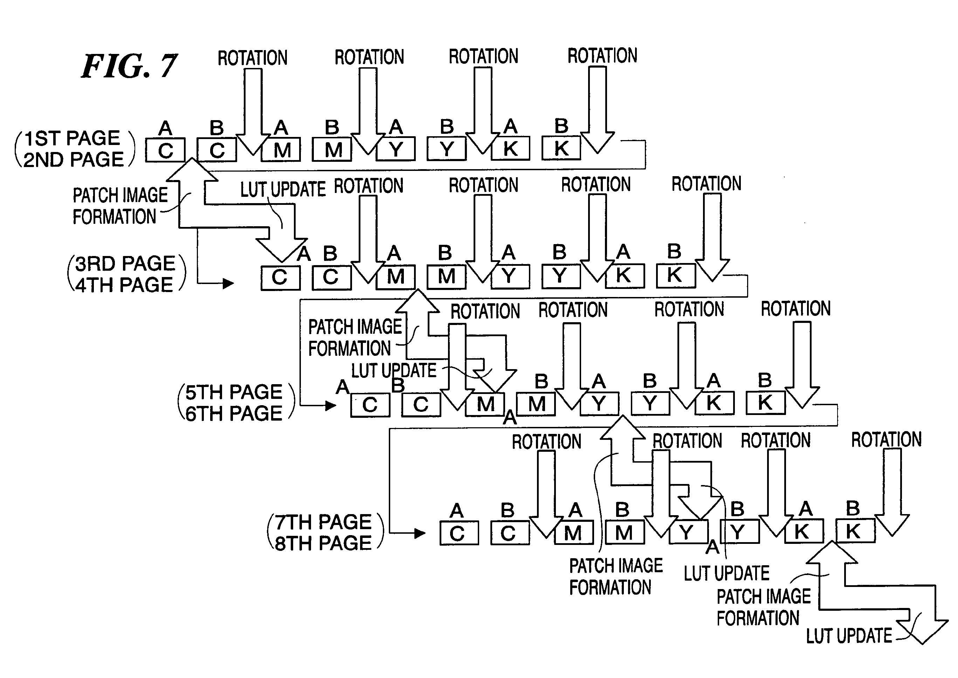

FIG. 7 is a schematic diagram showing a sequence executed during a stable mode by the image forming apparatus according to the first embodiment.

When the stabilization control mode is set to the stable mode, real time tonality correction is executed once every 8 pages, and because there is only one density sensor 26, the sequence is configured as shown in FIG. 7. The stable mode is a mode in which real time tonality correction is executed most frequently but within limits that do not cause a decrease in productivity.

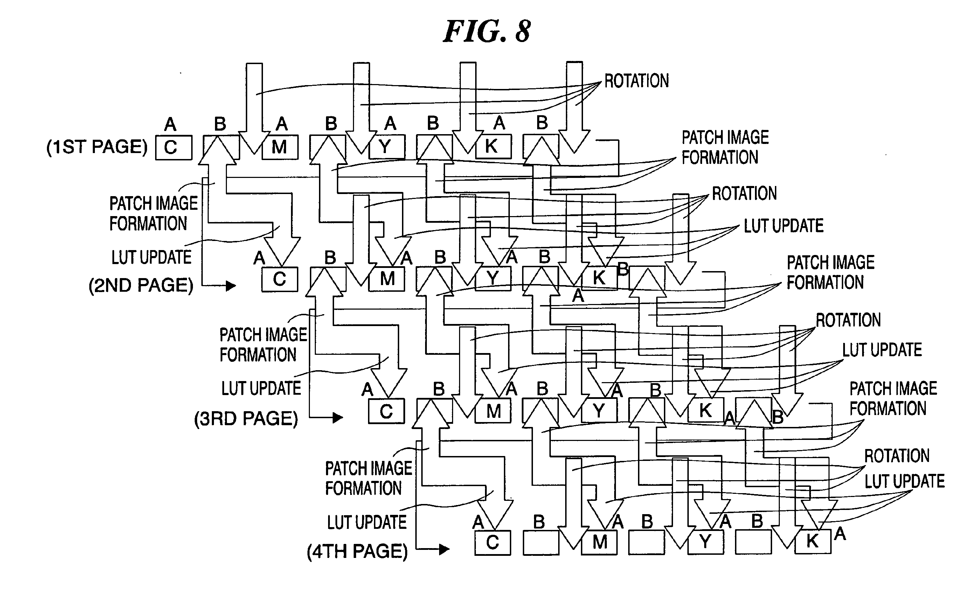

When the stabilization control mode is set to a highly stable mode, both engine tonality correction and real time tonality correction are executed. The sequence executed in this mode is shown in Fig. 8.

FIG. 8 is a schematic diagram showing a sequence executed during the highly stable mode by the image forming apparatus according to the first embodiment.

While in the stable mode a patch image is formed in timing between odd-numbered pages and even-numbered pages, in the highly stable mode a patch image is formed on even-numbered pages, which correspond to even-numbered pages in the stable mode and fed back for the next image formation, thus enabling control to be executed for every sheet (transfer material P). Of course, at this time, the patch images of each color are printed offset so as not to overlap one another on the intermediate transfer member 33. Moreover, the secondary transfer section 36 is given a reverse bias so as to prevent transfer onto the secondary transfer section 36. The space between sheets is at most approximately 30 mm and it is impossible to apply the reverse bias for secondary transfer during the short time period corresponding to the space. However, because the control is provided on a normal image area, that is, even-numbered pages, which correspond to even-numbered pages in the stable mode, i.e. on the side B, the transfer prevention using reverse bias can be carried out on the side B on which the patch image has been formed. The cleaning blade 41 then collects remaining toner on the intermediate transfer member 33.

Although in the above described example of control flow a small size transfer material P was used, the frequency of control is the same even when a large size transfer material P (for example, A3 or 11 x 13 inch) is used. Thus, for example, in the normal mode or the stable mode, after recording an image onto the large size transfer material P, a patch image has only to be formed prior to the start of rotation of the intermediate transfer member 33. In the highly stable mode, when the transfer material P is a large size, the print speed PPM representing the number of pages output per minute (PPM) is reduced to half and tonality correction is carried out over the entire circumference of the intermediate transfer member 33, i.e. over a time period of one rotation thereof.

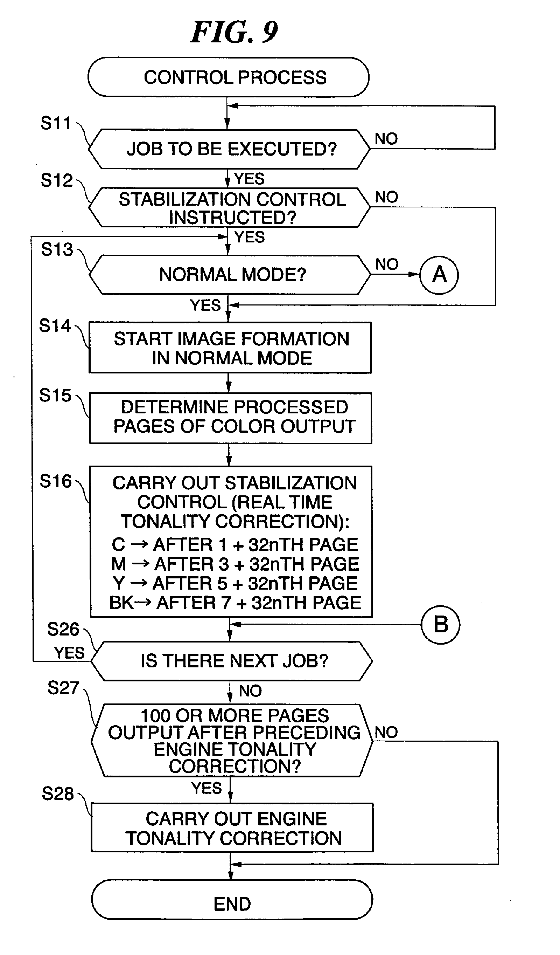

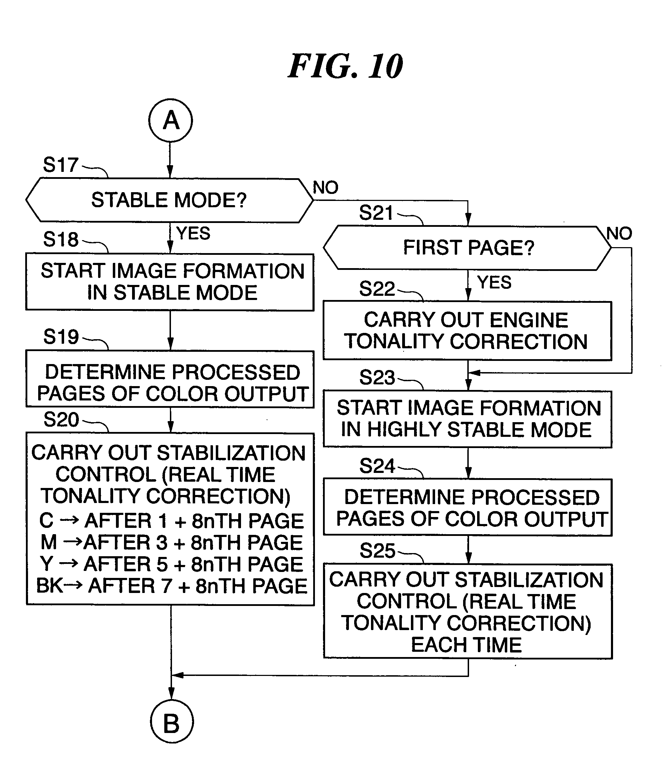

A description will be now given of the control process according to a control method for the image forming apparatus of the present embodiment, in particular the stabilization control, with reference to the flow charts of FIGS. 9 and 10.

FIGS. 9 and 10 are flow charts showing the control process.

Upon receiving an output instruction (a job) (YES to step S11), the image forming apparatus first determines whether or not an instruction designating color stabilization has been issued from either the operating and display section 114 or from the printer driver (step S12). If it is determined that no such instruction has been issued, then the control mode is switched to the normal mode and the process proceeds to a step S14. If it is determined that such instruction has been issued, then the process proceeds to a step S13, and thereafter the output processing is carried out using a stabilization control method suited to the mode in the steps S13 and seq.

If in the step S13 the mode is determined to be the normal mode, then image formation in the normal mode is started (step S14) and the number of color output pages already executed is ascertained in order to determine how many pages have been processed by the current job (step S15). Then, as shown in FIG. 7, patch images are formed after the (1+32n)th page for cyan (C), after the (3+32n)th page for magenta (M), after the (5+32n)th page for yellow (Y) and after the (7+32n)th page for black (BK), respectively, and the patch images are then detected by the density sensor 26, after which an LUT is generated by the LUT generator 121, the previous LUT is rewritten (real time tonality correction) (step S16), and then the process proceeds to a step S26.

On the other hand, if it is determined in the step S13 that the mode selected is not the normal mode, (NO to the step S13) but the stable mode, then image formation in the stable mode is started (step S17 and step S18), and, as in the normal mode, the number of color output pages already executed is ascertained in order to determine how many pages have been processed by the current job (step S19). As shown in FIG. 7, patch images are formed after the (1+8n)th page for cyan (C), after the (3+8n)th page for magenta (M), after the (5+8n)th page for yellow (Y) and after the (7+8n)th page for black (BK), respectively, and the patch images are then detected by the density sensor 26, after which an LUT is generated by the LUT generator 121, the previous LUT is rewritten (real time tonality correction) (step S20) and then the process proceeds to the step S26.

On the other hand, if it is determined in the step S13 that the mode selected is neither the normal mode nor the stable mode, (NO to the step S13 and to the step S17) but the highly stable mode, then it is determined whether or not the current job is processing a first page (step S21) and, if the job is processing a first page, the engine tonality correction is executed prior to output of the first page image (step S22). If the engine tonality correction has already been executed or if the job is processing second or subsequent pages, then image formation in the highly stable mode is started (step S23). Thereafter, in a step S24, as shown in FIG. 8, a patch image of each color for use in tonality correction is printed on an normal image area for the next job, the real time tonality correction is executed (step S25), and the process proceeds to the step S26. It should be noted that the processing of the steps S21-S25 use the normal image area corresponding to a normal even-numbered page (that is, side B) for improved stability. As a result, the print speed PPM is reduced to half.

In the above described way, images are formed according to the stabilization control mode selected and after completion of image formation for all the jobs (NO to the step S26), the image forming apparatus carries out the engine tonality correction (step S28) if the number of pages output from the immediately preceding engine tonality correction is 100 or more (YES to a step S27), and terminates the present control process to prepare for the next job.

If it is determined in the step S27 that the number of pages output from the immediately preceding engine tonality correction is less than 100, the present control process is terminated while skipping the step S28.

The above-mentioned total number of output pages means the sum of the number of full color pages output, but does not include the output count in a monotone mode. In the monotone mode, correction for changes in hue and changes in chromaticness like those typified by memory colors is not required and there is little need to implement real time tonality correction. Therefore, in the present embodiment, real time tonality correction is not performed in the monotone mode.

As described above, according to the image forming apparatus of the present embodiment, a plurality of color reproduction stabilization control modes are provided and can be selectively used, and therefore images can be formed using the best stabilization control mode (that is, engine tonality correction or real time tonality correction). As a result, color reproduction stability suited to the needs by a wide range of users can be secured, so that, for example, it is possible to meet the needs of both those users who make much of stability rather than productivity as well as those users who make much of cost and productivity rather than stability.

A description will be now given of a second embodiment of the present invention.

An image forming apparatus according to the second embodiment performs toner supply-related control (ATR control) as well in the highly stable mode, for additional improvement in stability.

In order to implement high-accuracy toner supply and increase stability, the present embodiment uses a combination of ATR (toner supply) control using the density sensor 26 (hereinafter "patch ATR control") and so-called video count ATR control, which involves accumulating values of an image information signal and supplying an amount of toner determined by the sum of the accumulated image formation signal value. The video count ATR control is the main control, with the patch ATR control implemented after output of a certain number of pages to determine whether or not the toner supply is too great or too small.

The reason why the patch ATR control and the video count ATR control are used in combination is that the video count ATR control is based on predictions, and it is difficult to digitally make the value of an actual output signal value equal to a predicted toner consumption amount. If this prediction-based control is continuously executed for hundreds of pages, the accumulation of errors causes a ratio TC (=T/(T+C) of the amount of toner in each developer to the amount of a carrier for applying a charge to the toner to fluctuate by several percent, which in turn causes a drastic change in image density. This inconvenience can be avoided to a certain degree by digitally performing real time tonality correction via an LUT, but it is very important to eliminate the causes of instability in the engine.

Therefore, according to the present embodiment, the rewriting control of the tonality correction table in the first embodiment and the frequency of the patch ATR control that is determined in advance is changed according to stabilization setting conditions set by the user.

The present embodiment also uses the density sensor 26 as used in the first embodiment. However, processing (that is, image formation pattern processing) for the ATR control is different from that of the first embodiment, that is, the same patch image cannot be fed back to two different parameters (that is, the LUT and the ATR) at the same time. Therefore, in the present embodiment, the frequency of the patch ATR control is increased and accurate toner supply is carried out, whereby the above-described conventional problem can be solved. It is preferable to use an image formation pattern that is as close to an analog patch as possible, for example, a 600-line image formation pattern. The present embodiment employs a 600-line image formation pattern. The more analogous the pattern, the higher the degree of correlation with the amount of toner inside the develop, whereby more accurate control can be achieved.

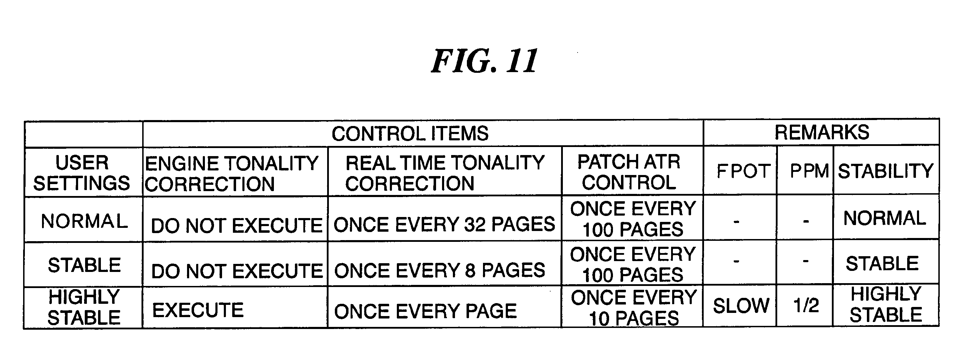

FIG. 11 is a diagram showing a list of controls executed by the image forming apparatus according to the second embodiment. The second embodiment is the same as the first embodiment except for the patch ATR control, and description of controls other than the patch ATR control is therefore omitted.

In the normal mode or the stable mode, the ATR control is executed every 100 pages of accumulated output. The patch ATR control is intended to compensate for the video count ATR control. More specifically, a toner supply amount is calculated from a video count signal (that is, the actual output signal value), which is the sum of the image information signal values obtained by accumulation during output of 100 pages, and from a toner supply table, described later, and continuous image formation is performed while supplying toner by controlling the number of rotations of a screw of a toner supply device according to the calculated toner supply amount. During this control, the difference between the actually supplied toner amount and the calculated toner supply amount is determined by the patch ATR control.

For example, if it is determined that the amount of toner is smaller than a required amount by an amount M during the patch ATR control, then since the number of pages output at this time is 100, (M/100) is a mismatched toner amount per page. Moreover, provided that the amount of toner supplied during output of the 100 pages is N, then (M/N) x 100% represents an error or difference in the amount of toner supplied during output of these 100 pages. The value of the conventional toner supply table is multiplied by the mismatch amount (M/N) x 100% to rewrite or update the toner supply table, to prepare for output starting from the 101^{st} page.

Moreover, even when the toner supply table is rewritten, the mismatch amount occurring up to the 100th page cannot be corrected. Therefore, the mismatch amount of toner per page (M/100) is added to a new toner amount calculated from the rewritten toner supply table so as to keep constant the TC ratio inside each developer.

Information from the density sensor 26 during the patch ATR control is converted to density information and a current TC ratio calculated by a density-TC ratio table. Since the amount of carrier is fixed, the short amount of toner M can be calculated easily.

By contrast, when the image forming apparatus is designated to carry out the control in the highly stable mode, the frequency of the patch ATR control is increased to once every 10 pages to accurately control the TC ratio inside each developer. The patch image during the patch ATR control is formed in 600 lines, and an image having a density slope (hereinafter referred to as the "edge characteristic") at an edge thereof that does not occur during normal image formation is formed. In other words, to use the same number of sampling points as during the tonality correction, then it is preferable to increase the patch image size by taking the edge margin into consideration.

Moreover, in the present embodiment, the patch ATR control is executed after output of a predetermined number of pages, and the area on the intermediate transfer member 33 is the entire circumference thereof corresponding to one rotation thereof. Accordingly, the continuous output speed decreases by two pages with a small size transfer material P and by one page with a large size transfer material P.

This is because in the patch ATR control a 600-line patch image is formed, and, in view of the edge characteristic, the patch image size must be larger than that of the real time tonality correction. Therefore, in the image forming apparatus of the present embodiment, a patch image cannot be formed in timing between small size sheets of paper (that is, between side A and side B). It is theoretically possible to carry out the patch ATR control in timing between sheets of paper as well by lengthening the circumference of the intermediate transfer member 33 and widening the interval between pages. In that case, however, the continuous output speed (for example, the print speed PPM) decreases by an amount corresponding to the amount by which the interval between sheets of paper is widened.

In the present embodiment, the tonality correction is not performed while the patch ATR control is being executed. Executing the LUT correction as well when executing the ATR correction results in overlapping corrections, that is, results in a large difference in density between, for example, the image on the 10th page and the image on the 11th page. Of course, in the event that the patch ATR control conducted once every 100 pages coincides with the tonality correction, the patch ATR control is executed with priority.

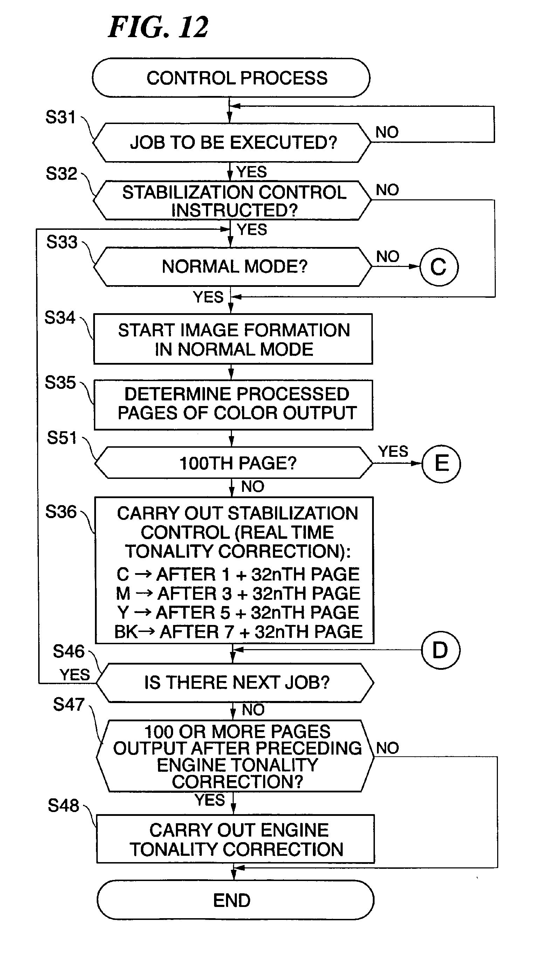

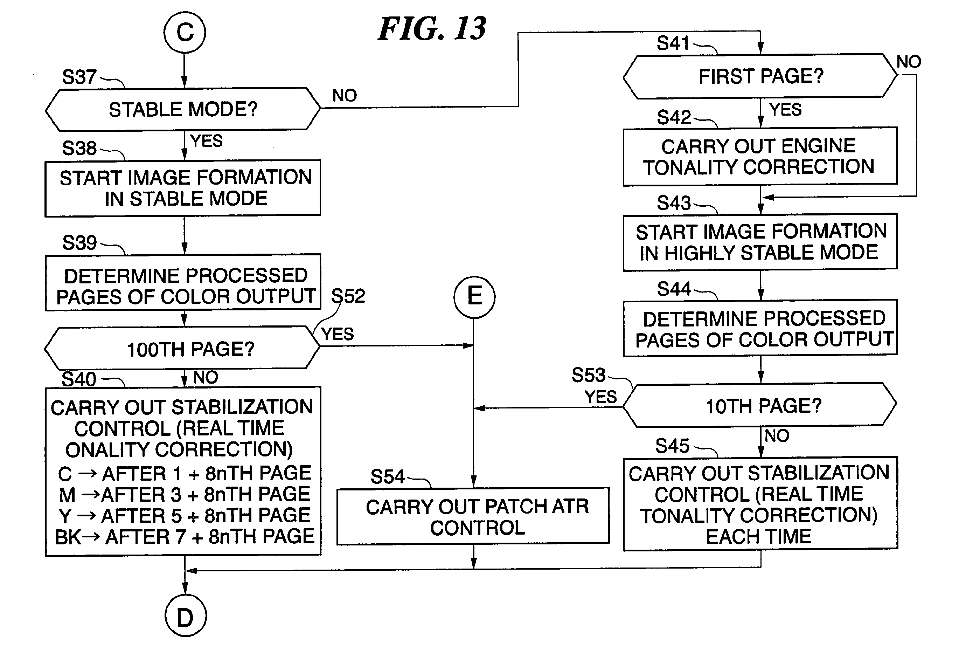

A description will be now given of the control process executed by the image forming apparatus according to the second embodiment, in particular the stabilization control, with reference to the flow charts of FIGS. 12 and 13. Steps which are the same as that of the first embodiment shown in FIGS. 9 and 10 are given the same step numbers and description thereof is omitted.

FIGS. 12 and 13 are flow charts of the control process executed by the image forming apparatus according to the second embodiment.

First, in steps S31 to S33 the same processing corresponding to the steps S11 to S13 described above with reference to FIG. 9is carried out. If it is determined in the step S33 that the control mode is set to the normal mode, then in a step S34 image formation in the normal mode is started, and in the next step S35, a determination is made as to how many pages have been processed by the current process. Then, the process proceeds to a step S36, and as shown in FIG. 7, patch images are formed after the (1+32n)th page for cyan (C), after the (3+32n)th page for magenta (M), after the (5+32n)th page for yellow (Y) and after the (7+32n)th page for black (BK), respectively, and the patch images are then detected by the density sensor 26, after which an LUT is generated by the LUT generator 121 and the previous LUT is rewritten (real time tonality correction). At this time, since the patch ATR control is carried out once every 100 pages (step S51 and step S54), a determination is made as to whether or not the real time tonality correction and the patch ATR control coincide, and if yes, the patch ATR control is executed with priority.

If the stable mode is selected (step S37), then in a step S38 image formation in the stable mode is started. In the next step S39, as with the normal mode, a determination is made as to how many pages have been processed by the current job. Then, as shown in FIG. 7, patch images are formed after the (1+8n)th page for cyan (C), after the (3+8n) th page for magenta (M), after the (5+8n) th page for yellow (Y) and after the (7+8n)th page for black (BK), respectively, and the patch images are then detected by the density sensor 26, after which an LUT is generated by the LUT generator 121, and the previous LUT is rewritten (real time tonality correction). At this time, since the patch ATR control is carried out once every 100 pages (step S51 and step S54), a determination is made as to whether or not the real time tonality correction and the patch ATR control coincide, and if yes, the patch ATR control is executed with priority.

If the highly stable mode is selected, then it is determined if the current job is processing a first page (step S41), and if yes, the engine tonality correction is carried out prior to output of the first page image (step S42). After the engine tonality correction or if the job is processing second or subsequent pages, then image formation in the highly stable mode is started (step S43). Thereafter, in a step S44, a patch image of each color for use in tonality correction is printed on an normal image area for the next job, the real time tonality correction is executed (step S45), and the process proceeds to a step S46. Since the normal image area corresponding to a normal even-numbered page is used for improved stability, the print speed PPM is reduced to half. Moreover, since the patch ATR control is carried out once every 10 pages (step S53, S54), the real time tonality correction after every multiple of 10 is interrupted and the patch ATR control is executed with priority.

In the above described way, images are formed according to the stabilization control mode selected and after completion of image formation, the image forming apparatus carries out again the engine tonality correction (steps S46-S48) if the number of pages output from the immediately preceding engine tonality correction is 100 or more, and terminates the present control process to prepare for the next job.

According to the image forming apparatus of the present embodiment as described above, a plurality of stabilization control modes are provided and the ATR control and the tonality correction control are carried out in a suitable combination according to the stabilization control mode, thereby making it possible to perform more stable image formation. As a result, the needs of a variety of users can be satisfied and usability can be improved.

A description will be now given of a third embodiment of the present invention.

The image forming apparatus according to the third embodiment is configured such that the user is notified of stabilization control parameters and can set these stabilization control parameters as desired.

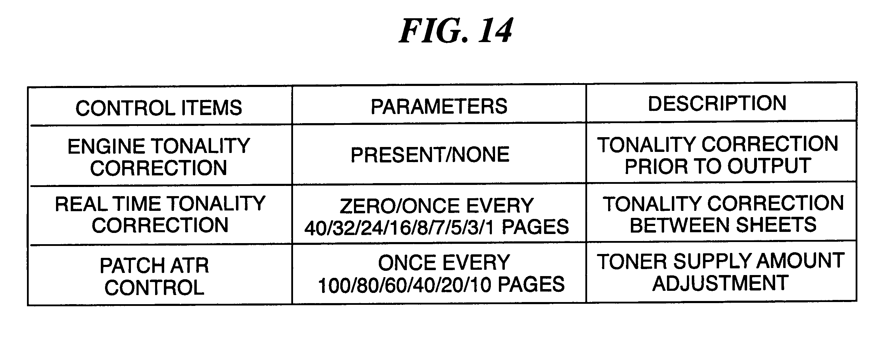

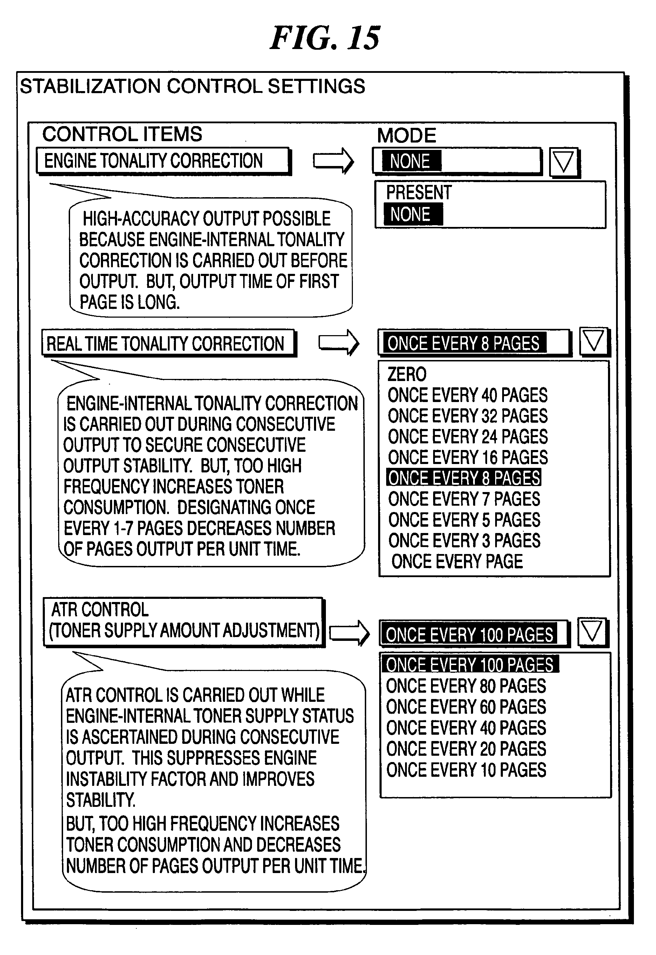

Fig. 14 is a diagram showing a stabilization control parameter list used in a control process executed by the image forming apparatus according to the third embodiment. FIG. 15 is a diagram showing a stabilization control setting screen displayed during execution of the control process. On the screen, the user can set items relating to stabilization control and modes that indicate control frequency via a printer driver.

The stabilization control setting screen is characterized by displaying merits and demerits when settings relating to stabilization control are customized. The engine tonality correction involves forming a plurality of patch images on the intermediate transfer member 33 prior to the output operation, detecting the density by the density sensor 26, and rewriting the tonality correction table for all the colors. Consequently, although the tonality can be accurately corrected starting with the first transfer material P, the printout of the first transfer material P printout is delayed.

In the real time tonality correction, the control frequency can be designated from among a group of zero, once every number of page(s), 40, 32, 24, 16, 8, 7, 5, 3, and 1. As a merit of designating the frequency like this, the frequency can be set such that the shorter the interval between sheets of pages, the more accurate the tonality correction that can be achieved. As a demerit, the toner consumption amount increases, and if once every 7 pages or a less number of pages is designated as the frequency, the number of sheets consecutively outputted per unit time, e.g. the print speed PPM, decreases.

In the patch ATR control as well, the control frequency can be designated to once every number of pages selected from 100, 80, 60, 40, 20, and 10. As merits of designating the frequency like this, first, control errors are unlikely to occur because one factor for engine instability is adjusted, and secondly, the controlled value recovers more slowly than the feedback to the LUT, and therefore no step or abrupt change in the controlled digital value occurs due to the use of the LUT. As demerits, first, the number of pages consecutively outputs per unit time decreases because the patch ATR control uses an area corresponding to the entire circumference of the intermediate transfer member 33 for a single control operation, and secondly, the toner consumption amount increases.

The stabilization control parameters that are input by the user via the operating and display section 114 are stored in the HDD 115 and stabilization control appropriate to the parameters is executed. The image forming apparatus according to the present embodiment is configured such that the user can set the stabilization control parameters, and therefore can meet the needs of a wide variety of users.

FIG. 15 is a diagram showing a stabilization control setting screen displayed during execution of the control process by the image forming apparatus according to the third embodiment.

On the stabilization control setting screen explanations like those shown in FIG. 15 are displayed, so that the user can fully grasp the above-described merits and demerits.

A description will be now given of a fourth embodiment of the present invention.

In the fourth embodiment, instead of the user being able to select the stabilization control parameters as in the third embodiment described above, an image processing apparatus according to the fourth embodiment analyzes PDL code, determines the importance of color stability using the file format of the PDL code, and performs stabilization control.

In the present embodiment, in the arrangement of any of the image forming apparatuses described above with respect to the various embodiments, the image processing apparatus is implemented by the image processor 209 shown in FIG. 4 and the other components, including the printer 200, etc., constitutes the image forming apparatus. The present embodiment may also be configured as an image forming system, in which the image processing apparatus is provided outside the image forming apparatus described above in any of the foregoing embodiments and connected thereto. In the present embodiment, the PDL language or a postscript level commonly used in DTP (Desk-Top Publishing) is applied.

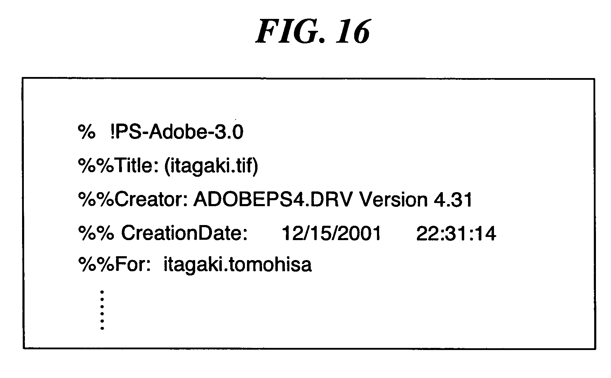

FIG. 16 is a diagram showing the contents of a postscript file. The contents of the postscript file in FIG. 16 are obtained by creating a simple bitmap image using photo retouch software and outputting the bitmap image to the postscript file. "%%Title: (itagaki.tif)" in FIG. 16 indicates a file name to be printed, and ".tif" indicates that the file is a tiff format bitmap image. "%%Creator" indicates the name of a printer driver that created the file. "%%CreationDate" indicates the date of creation. "%%For" indicates the name of the creator of the file.

Application software that make much of color, in other words, application software for creating image data that is mainly intended "to provide information", like a merchandise catalog, includes photo retouch software, drawing software and page layout software. The above-mentioned postscript file adopts a file format suited to this type of software.

On the other hand, application software that do not make much of color includes software for creating many types of text-based image data that are designed mainly "to transmit information". Typical examples are software for creating text documents (.txt), such as Microsoft Corp.'s (registered trademark) Word (.doc) and Excel (.xls). In these types of application software, it suffices that one color can be discriminated from another.

The RIP 116 inside the image processor 209 analyzes the PDL code to determine whether the file format of the PDL code has been created by application software intended mainly to "provide information" or by application software intended mainly to "transmit information", automatically determines the stabilization control conditions (mode) based on the determination result, and transmits the determined conditions to the printer section 200. At this time, the stabilization control mode is set to the normal mode or the stable mode, without the control mode being automatically set to the highly stable mode in which the FPOT and the print speed PPM decrease.

For example, image data created as a text document, is determined as image data that does not make much of color and the image data is then automatically checked in the normal mode described above with reference to the first and second embodiments, after which the image data is then sent to the printer section 200. The present embodiment is thus advantageous in that the image data can be automatically analyzed and determined with respect to its main purpose, without the user having to check the image data. In actual processing, a user who has created a print job outputs a print command via the operating and display section 114. The RIP 116 of the image processing apparatus then determines whether or not the received image data contains any of extensions ".doc", ".xls" and ".txt". If any of the foregoing extensions are included in the image data, the image processing apparatus is set to the normal mode, whereas if none of the foregoing extensions is included, then the image processing apparatus is set to the stable mode. A flow chart of subsequent processing is the same as that for the second embodiments, and therefore description thereof is omitted.

By performing the processing described above, the RIP 116 automatically determines whether or not image color stability (that is, reproducibility) should be made much of and determines the stabilization control conditions (mode) accordingly. As a result, image formation suited to the main purpose of the image data can be formed without placing an undue burden on the user.

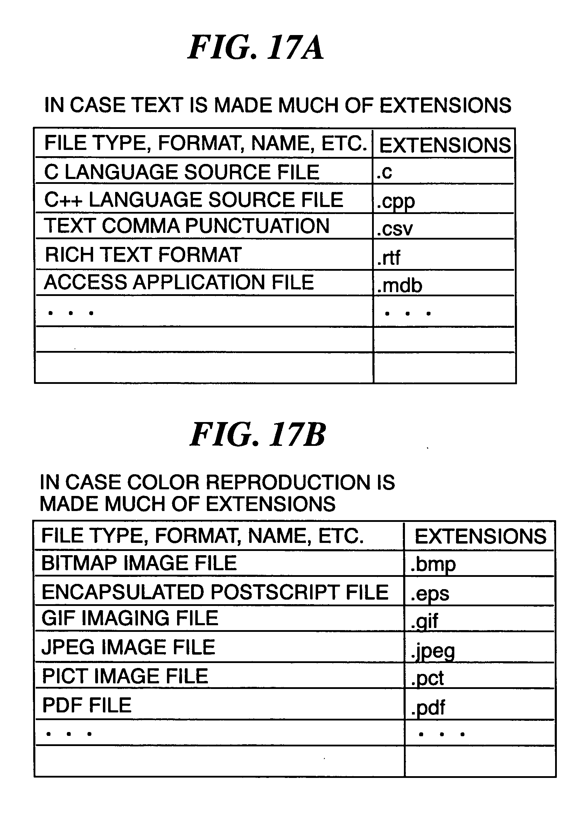

FIGS. 17A and 17B are diagrams showing examples of a file format that can be registered by user definition.

In the present embodiment, the documents of normal mode file formats are Word, Excel, and text documents. However, as shown in FIGS. 17A and 17B, the present embodiment may be configured so as to enable the user to register in the image processing apparatus definitions that determine whether the file format makes much of text (as in FIG. 17A) or color reproduction (as in FIG. 17B), thus solving the problem with the prior art. For example, the normal mode is selected if processing image data that includes an extension ".rtf" or ".mdb", thus solving the above-described problem with the prior art.

According to the present embodiment, by analyzing the PDL code, it is possible to form an image using the most appropriate stabilization control (engine tonality correction, real time tonality correction or patch ATR control). As a result, an image forming apparatus that can provide color reproduction stability for a wide range of users can be realized.

A description will be now given of a fifth embodiment of the present invention.

The fifth embodiment is an improvement over the fourth embodiment in terms of the PDL code analysis method. In a typical design office or a magazine editorial office, there are designers who value color reproducibility as well as other users who perform general office work such as line art processing and text document processing, and in many cases such users determine to what extent color reproducibility is important. In view of such situations, it can be envisaged that whether or not print jobs to be process make much of color is determined and registered for each user in advance, it is determined from a registered user's name whether or not a print job should be carried out in a mode making much of color, and stabilization control conditions employed by the printer are determined based on the result of the determination, thus solving the above-described problem with the prior art.

As noted above with respect to the fourth embodiment, a user name like "%%For: itagaki.tomohisa", for example, is written in the PDL code (in FIG. 16). In the present embodiment, such user name information is used to determine whether a user makes much of print accuracy or print speed. For example, the image forming apparatus is provided with a user stabilization information storage means that records registered user names in correlation with frequencies of execution of stabilization control for the user names, and a stabilization control mode is selected from a registered user name. If there is no such stabilization control setting from a certain user for a certain job, then image formation may be executed in a stabilization control mode which has the maximum frequency set for the user.

With this arrangement, difficulties associated with stabilization control setting can be eliminated and images formed that are suitable for the level of imaging demanded by users.

It should be noted that the present invention is not limited to the embodiments described above but can encompass a variety of modifications. For example, such variations may include, but are not limited to, the following:

In the above-described embodiments, images are formed by stabilization control (that is, engine tonality correction, real time tonality correction or patch ATR control) in a user-selected stabilization control mode or in a stabilization control mode determined from file format or user name. Alternatively, however, the criteria for determining and selecting the stabilization control mode may, for example, be information indicative of whether or not a print job is for double-sided printing, information indicative of whether or not an image file is appended, or information indicative of an application name.

Moreover, double-sided printing has a drawback that in bookbinding with folding in half or the like, if adjacent colors are discolored, resulting in degraded quality of the finished product. To cope with this, it may be set in advance that when double-sided printing is selected, image formation is to be carried out in the stable mode.

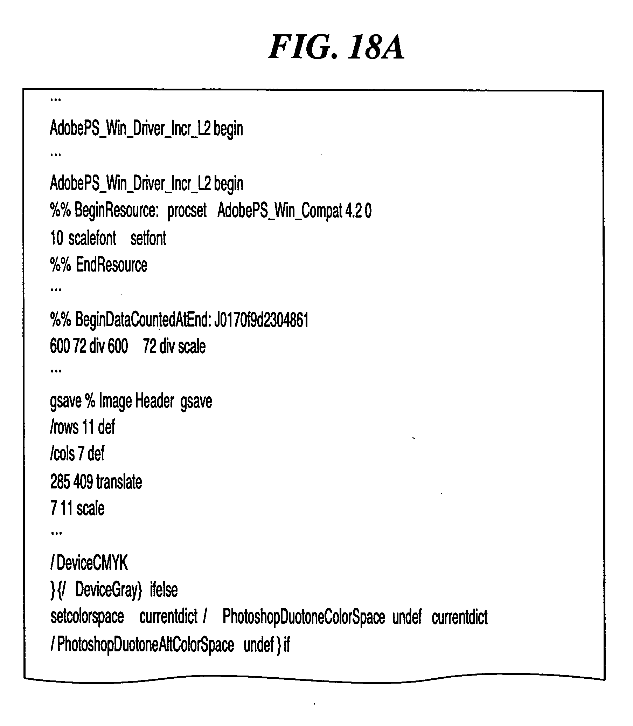

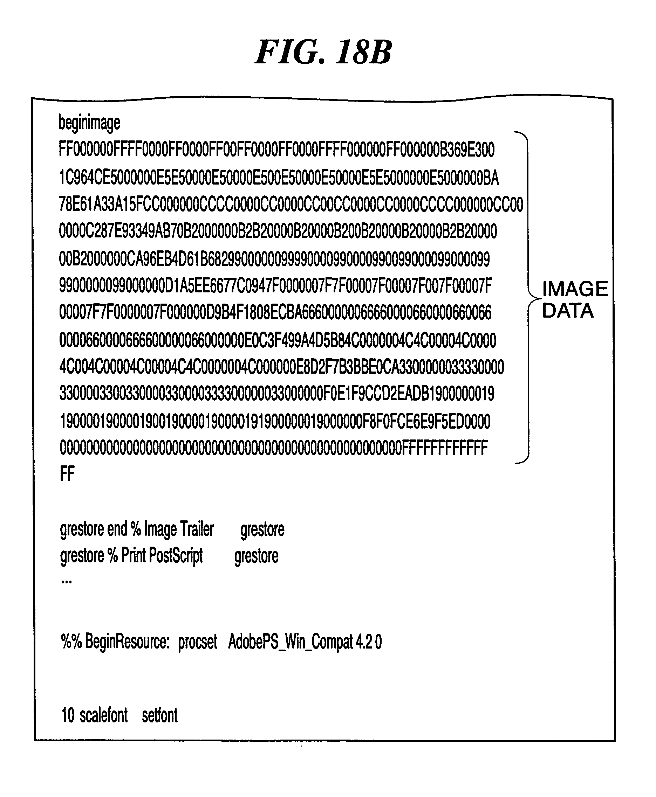

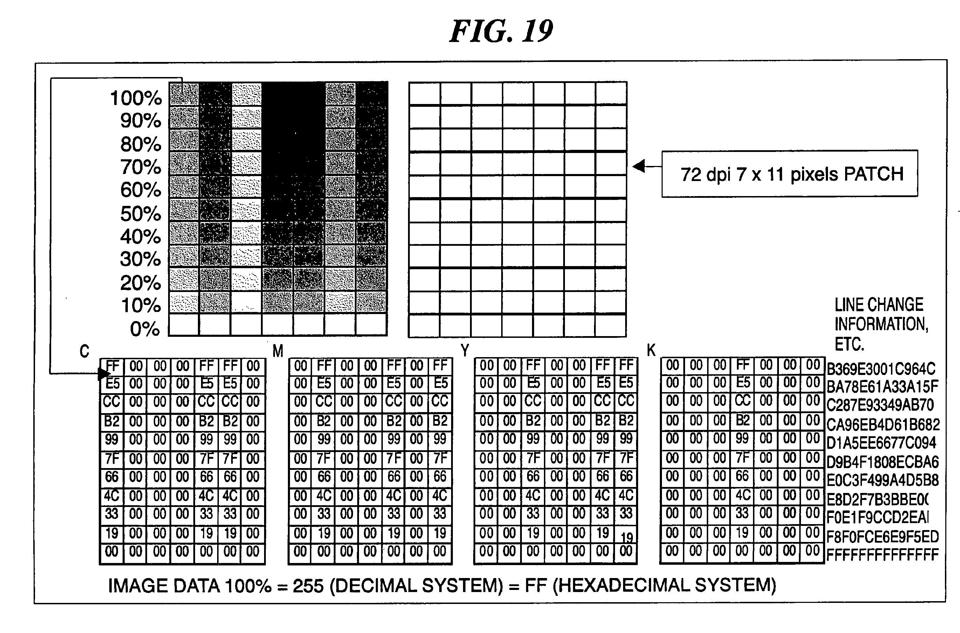

FIGS. 18A and 18B are diagrams showing an example of bitmap image described in PDL (page description language). FIG. 19 is a diagram illustrating the structure of the bitmap image in FIGS. 18A and 18B.

The illustrated example shows a case where a CMYK image with 7 x 11 pixels created using photo retouch software has been printed at a resolution of 72 dpi. The image file contain image data information for each pixel (see FIG. 19). From this information, it can be judged that a photo image is contained in the image file. That is, the PDL code is analyzed to determine whether or not an image file is contained in the PDL code, and if the image file is contained in the PDL code, it is determined that the print job makes much of color reproducibility, and the stabilization control mode is set to the stable mode. On the other hand, if no image file is contained in the PDL code, the stabilization control mode is set to the normal mode.

Further, although in the fourth embodiment described above the PDL code is analyzed and an extension attached to the image data is used to determine whether or not the print job makes much of color reproducibility, alternatively the application name may be used to make the determination.

FIG. 20 is a diagram showing an example of a PS code.

The PS code shown in FIG. 20 is one output from Apple's Macintosh (hereinafter "Mac") OS. The application uses Photoshop (registered trademark), as described in "Creator". A determination is made as to whether or not stability is made much of based on this application information.

With this arrangement, the importance of color can be easily determined even with a Mac format file that does not use an extension.

It goes without saying that the object of the present invention may also be accomplished by supplying a system or an apparatus with a storage medium (or a recording medium) in which a program code of software that implements the functions of any of the above-described embodiments is stored, and causing a computer (or CPU or MPU) of the system or apparatus to read out and execute the program code stored in the storage medium.

In this case, the program code itself read from the storage medium realizes the functions of any of the above-described embodiments, and hence the program code and a storage medium on which the program code is stored constitute the present invention.

Further, it is to be understood that the functions of any of the above-described embodiments may be accomplished not only by executing the program code read out by a computer, but also by causing an OS (operating system) or the like which operates on the computer to perform a part or all of the actual operations based on instructions of the program code.

Further, it is to be understood that the functions of any of the above-described embodiments may be accomplished by writing the program code read out from the storage medium into a memory provided in an expansion board inserted into a computer or a memory provided in an expansion unit connected to the computer and then causing a CPU or the like provided in the expansion board or the expansion unit to perform a part or all of the actual operations based on instructions of the program code.

Further, the above program has only to realize the functions of any of the above-described embodiments on a computer, and the form of the program may be an object code, a program executed by an interpreter, or script data supplied to an OS.

Examples of the storage medium for supplying the program code include a floppy (registered trademark) disk, a hard disk, a magneto-optical disk, a CD-ROM, a CD-R, a CD-RW, a DVD-ROM, a DVD-RAM, a DVD-RW, a DVD-RW, a DVD+RW, a magnetic tape, a non-volatile memory card, and a ROM. Alternatively, the program may be supplied by downloading form another computer, a database, or the like, not shown, connected to the Internet, a commercial network, a local area network, or the like.

An image forming apparatus that can make it possible to change as desired the conditions for color stabilization control performed through a stabilization control means, so as to provide color stabilization suited to a wide range of users, to thereby accommodate the needs of a variety of users. Color information is read from a predetermined color material. Color stabilization control is carried out based on the read color information during image formation. A mode in which the color stabilization control is carried out is designated according to externally input information. The color stabilization control is carried out in the designated mode.

## Claims

1. An image forming apparatus comprising:
an image forming device that carries out image formation;
a reading device that reads color information from a predetermined color material;
a stabilization control device that carries out color stabilization control based on the read color information during image formation by said image forming device; and
a setting device that changes conditions in which the color stabilization control is carried out by said stabilization control device.

2. An image forming apparatus as claimed in claim 1, comprising an image carrier that has formed thereon an image corresponding to an optical image, said image carrier having a normal image area and a normal non-image area, and wherein the color material is formed on the normal image area or the normal non-image area of said image carrier.

3. An image forming apparatus as claimed in claim 1, wherein said color stabilization control device controls at least one of a tonality correction table for correcting tonality of the color material and a correction amount of the color material.

4. An image forming apparatus as claimed in claim 1, wherein the conditions in which the color stabilization control is carried out include frequency at which the color stabilization control is carried out.

5. An image forming apparatus as claimed in claim 2, wherein when the color material is formed on the normal image area of said image carrier, a plurality of color materials are formed on the normal image area.

6. An image forming apparatus as claimed in claim 3, wherein when timing in which a supply amount of the color material is controlled and timing in which the tonality correction table coincide, priority is given to the control of the supply amount of the color material.

7. An image processing apparatus comprising:
an image forming device that carries out image formation;
a reading device that reads color information from a predetermined color material;
a stabilization control device that carries out color stabilization control based on the read color information during image formation by said image forming device; and
a stabilization control designation device that designates a mode in which the color stabilization control is carried out, according to externally input information,
wherein said stabilization control device carries out the color stabilization control in the mode designated by said stabilization control designation device.

8. An image processing apparatus as claimed in claim 7, further comprising a storage device that stores the externally input information.

9. An image processing apparatus comprising:
an image forming device that carries out image formation;
a reading device that reads color information from a predetermined color material;
a stabilization control device that carries out color stabilization control based on the read color information during image formation by said image forming device;
a stabilization control designation device that designates a mode in which the color stabilization control is carried out; and
an analyzer device that analyzes externally input information,
wherein said stabilization control designation device determines the mode in which the color stabilization control is carried out, based on results of analysis by said analyzer device and designates the determined mode for said stabilization control device.

10. An image processing apparatus as claimed in claim 9, further comprising a storage device that stores user information and color stabilization control mode information corresponding to the user information, and
wherein said stabilization control designation device determines the color stabilization control mode to be designated for said stabilization control device by checking contents of said storage device based on the user information included in the analysis results from said analyzer device.

11. An image processing apparatus as claimed in claim 7 or claim 9, wherein the externally input information comprises one selected from the group consisting of a file name, a user name, an application name, a file format, a data attribute, and a descriptive code.

12. A control method for an image forming apparatus, comprising:
an image forming step of carrying out image formation;
a reading step of reading color information from a predetermined color material;
a stabilization control step of carrying out color stabilization control based on the read color information during image formation in said image forming step; and
a setting step of changing conditions in which the color stabilization control is carried out in said stabilization control step.

13. A control method for an image forming apparatus as claimed in claim 12, wherein the color material is formed on a normal image area or a normal non-image area of an image carrier on which is formed an image corresponding to an optical image.

14. A control method for an image forming apparatus as claimed in claim 12, wherein said color stabilization control step comprising controlling at least one of a tonality correction table for correcting tonality of the color material and a correction amount of the color material.

15. A control method for an image forming apparatus as claimed in claim 12, wherein the color stabilization control is carried out include frequency at which the color stabilization control is carried out.

16. A control method for an image forming apparatus as claimed in claim 13, wherein when the color material is formed on the normal image area of the image carrier, a plurality of color materials are formed on the normal image area.

17. A control method for an image forming apparatus as claimed in claim 14, wherein when timing in which a supply amount of the color material is controlled and timing in which the tonality correction table coincide, priority is given to the control of the supply amount of the color material.

18. A control method for an image processing apparatus comprising:
an image forming step of carrying out image formation;
a reading step of reading color information from a predetermined color material;
a stabilization control step of carrying out color stabilization control based on the read color information during image formation in said image forming step; and
a stabilization control designation step of designating a mode in which the color stabilization control is carried out, according to externally input information,
wherein said stabilization control step comprises carrying out the color stabilization control in the mode designated in said stabilization control designation step.

19. A control method for an image processing apparatus as claimed in claim 18, further comprising a storage step of storing the externally input information in storage means.

20. A control method for an image processing apparatus comprising:
an image forming step of carrying out image formation;
a reading step of reading color information from a predetermined color material;
a stabilization control step of carrying out color stabilization control based on the read color information during image formation in said image forming step;
a stabilization control designation step of designating a mode in which the color stabilization control is carried out; and
an analysis step of analyzing externally input information,
wherein said stabilization control designation comprises determining the mode in which the color stabilization control is carried out, based on results of analysis in said analysis step and designating the determined mode for said stabilization control step.

21. An image processing apparatus control method as claimed in claim 20, further comprising a storage step of storing user information and color stabilization control mode information corresponding to the user information in storage means, and
wherein said stabilization control designation step comprises determining the color stabilization control mode to be designated for said stabilization control step by checking contents of the storage means based on the user information included in the analysis results obtained in said analysis step.

22. A control method for an image processing apparatus as claimed in claim 18 or claim 20, wherein the externally input information comprises one selected from the group consisting of a file name, a user name, an application name, a file format, a data attribute, and a descriptive code.
